# EUROPEAN PATENT SPECIFICATION

(11) **EP 2 359 034 B1**
(45) Date of publication and mention of the grant of the patent: **17.05.2017**
(21) Application number: 09776406.2
(22) Date of filing: 03.03.2009
(51) Int. Cl.: F16J 15/08

(54) **SEALING SYSTEM AND CYLINDER HEAD GASKET FOR A RECIPROCATING PISTON COMBUSTION ENGINE**
DICHTUNGSSYSTEM UND ZYLINDERKOPFDICHTUNG FÜR BRENNKRAFTMASCHINEN
SYSTÈME D'ÉTANCHÉITÉ ET JOINT D'ÉTANCHÉITÉ DE CULASSE POUR UN MOTEUR À COMBUSTION À PISTON ALTERNATIF

(30) Priority: 19.12.2008 DE 102008064044
(43) Date of publication of application: 24.08.2011
(73) Proprietor: ElringKlinger AG, 72581 Dettingen (DE)
(72) Inventor: SCHUMACHER, Thomas, 72585 Riederich (DE); BENDL, Klaus, 75038 Oberderdingen (DE)
(74) Representative: Hoeger, Stellrecht & Partner Patentanwälte mbB
(86) International application number: PCT/EP2009/001485
(87) International publication number: WO 2010/069408

(56) References cited:
- EP-A- 0 769 616
- EP-A- 1 348 896
- DE-A- 3 711 664

## Description

The invention relates to a sealing system for a reciprocating piston combustion engine having cylinder liners, which in order to form a liner projection project beyond a sealing face of an engine block facing the cylinder head gasket, and having a cylinder head gasket, which comprises at least one steel sheet layer having at least one combustion chamber opening and screw holes for the passage of cylinder head bolts, wherein an annular region of the sheet layer that adjoins and surrounds the combustion chamber opening and forms a metallic combustion-chamber sealing element is provided for clamping in between an end face of a liner and a cylinder head (see DE 37 11 665 A1).

With regard to a cylinder head gasket of the type mentioned above it should first be pointed out that it may have only a single combustion chamber opening if the engine, for which the cylinder head gasket is intended, is indeed a multi-cylinder engine, which however has for each cylinder a separate cylinder head and a separate cylinder head gasket; in particular, however, the invention relates to cylinder head gaskets having a plurality of combustion chamber openings for multi-cylinder engines (in-line or V-engines). A steel sheet cylinder head gasket, according to the present invention, may be a single-layer or multilayer gasket, for example one, in which one steel sheet layer possibly subdivided into segments is to extend over the entire sealing gap between cylinder head and engine block, while a second steel sheet layer or a plurality of further steel sheet layers extend only over a sub-region or a plurality of sub-regions of the sealing plate formed by the cylinder head gasket. Finally, the previously mentioned metallic combustion-chamber sealing element need not be purely metallic as the steel sheet may in a known manner be provided with a thin coating of a non-metallic material in order to bring about specific desired surface properties of the combustion-chamber sealing element.

In an engine, the area around the combustion chamber openings has to be sealed off from the highest media pressures, namely from the gas pressures arising in the combustion chambers. For this reason, the sealing system around a combustion chamber is fashioned in such a way that it is there, at the fitted cylinder head gasket, that the highest specific pressures (clamping force per unit area) arise. In order to achieve this, in the case of a single-layer cylinder head gasket of the previously described type, the steel sheet layer around the combustion chamber opening may be provided with a folded over or doubled over portion for which purpose an annular region of the steel sheet layer that adjoins and surrounds the combustion chamber opening is bent out from the sheet layer and folded over onto the sheet layer, so that a combustion-chamber sealing element formed by the steel sheet layer and the folded over portion has a material thickness that is equal to double the sheet thickness. A prerequisite of this is however the use of an easily workable steel sheet, namely in practice a relatively expensive sheet of a nickel steel, because otherwise there is a danger not only that the sheet, when the described annular region is bent back through ca. 180°, may develop cracks at the bending point but also that this annular region may develop cracks at the radially outer edge of the surround layer (owing to the extension of the free edge of the annular region when the latter is folded over). The perceived advantage of the previously described sealing system is however that because of the support of the region of the steel sheet layer provided with the surround layer on the cylinder liner having a liner projection during assembly of the engine, i.e. during tightening of the cylinder head bolts with a setpoint torque specified by the engine designer, around the combustion chamber opening and immediately adjacent thereto high compression forces arise between the cylinder head, the combustion-chamber sealing element formed by the steel sheet layer and the folded over portion thereof, and the cylinder liner.

The underlying problem of the invention was to improve a sealing system of the initially described type in a way that allows the cylinder head gasket to be manufactured more economically.

The basic idea of the solution according to the invention to this problem is, in such a sealing system, to increase the size of the liner projection and, in the case of the cylinder head gasket, dispense with the folded over portion and/or any other type of thickening of the region of the steel sheet layer that rests on the cylinder liner, thereby making it possible to use, for the steel sheet layer of the cylinder head gasket in question, a steel sheet that is less easily workable than a sheet of a steel having a relatively high nickel fraction and that is therefore much less expensive than such a nickel steel sheet. Moreover, this then also eliminates the outlay for manufacture of the folded over portion. On the other hand, increasing the size of the liner projection entails at least no significant rise in costs because increasing the size of the liner projection involves either only a slight increase of the length of the cylinder liner (as a rule by markedly less than 1 mm) or a slight shift of the point of support of the cylinder liner on the engine block (likewise by less than 1 mm) in the direction of the engine-block sealing face that is to face the cylinder head gasket.

A sealing system according to the invention of the initially defined type is therefore notable in particular for the fact that the material thickness of the metal combustion-chamber sealing element is equal to the material thickness of the sheet of the steel sheet layer of the cylinder head gasket that rests on the cylinder liner, and that, given cylinder head bolts tightened with the specified setpoint torque, the liner end face projects beyond the engine-block sealing face by a projection dimension that is at least equal to the material thickness of the sheet of the said steel sheet layer. In this connection, the following should additionally be pointed out: as a cylinder liner cannot be regarded as an absolutely rigid component, during assembly of the engine, i.e. during tightening of the cylinder head bolts, a cylinder liner is placed under not inconsiderable compressive stresses in the direction of the axis of the cylinder liner, with the result that the length of the cylinder liner between its point of support on the engine block and its end face facing the cylinder head gasket and/or the cylinder head is slightly reduced - in commercial vehicle engines as a rule by an amount in the order of magnitude of 0.2 mm. When it is stated above that according to the invention the material thickness of the metallic combustion-chamber sealing element is equal to the material thickness of the sheet of the sheet layer, what is intended to be expressed by this is that the material thickness of the region of the steel sheet layer of the cylinder head gasket that rests on the cylinder liner has been increased neither by producing a surround layer nor for example by being provided with a sheet metal ring laid thereon or with a pressure-resistant coating. Finally, by a projection dimension that is at least equal to the material thickness of the sheet of the steel sheet layer is meant, not an arbitrarily large projection of the cylinder liner beyond the engine-block sealing face, but merely a projection dimension that is sufficient to generate the necessary compression forces, even though the region of the cylinder head gasket that rests on the cylinder liner has not been thickened relative to the gasket region immediately adjoining this region - in the tightened state of the cylinder head bolts, the projection dimension is therefore equal to the material thickness of the sheet of the steel sheet layer or at most equal to 1.5 times this material thickness. It should moreover additionally be pointed out that, as will emerge from the following, what is meant by the material thickness of the region of the steel sheet layer that rests on the cylinder liner is the mean material thickness of this sheet layer region.

For the sheet layer forming the combustion-chamber sealing element preferably steels having a maximum elongation of less than 20% are used.

If the cylinder head gasket is provided at a spacing from the combustion-chamber sealing element and/or from combustion-chamber sealing elements with further sealing elements, in particular with at least one elastomer sealing element mounted on the one steel sheet layer it is advantageous to fashion the sheet layer extending over the cylinder liner in such a way that this layer is offset or cranked with regard to the liner radially outwardly of the liner in the direction of (toward) the engine-block sealing face, wherein the height of the offset is at most approximately equal to the projection dimension of the liner. Such further sealing elements may be used to effect sealing around cooling water openings and/or engine oil openings of the cylinder head gasket. If in the fitted state of the cylinder head gasket the steel sheet layer provided with the combustion-chamber sealing element is immediately adjacent to the engine block and a further sealing element provided on this sheet layer does not project beyond this sheet layer in the direction of the engine block, the height of the offset is advantageously so dimensioned that it is approximately equal to the projection dimension; the steel sheet layer provided with the combustion-chamber sealing element then abuts, in the fitted state of the cylinder head gasket, radially outwardly of the liner on the engine-block sealing face, and the cylinder liner or a cylinder-head support element, which is yet to be discussed later, acts as a deformation-limiting device for sealing elements that lie outwardly of the cylinder liner. If in the fitted state of the cylinder head gasket the sheet layer provided with the combustion-chamber sealing element does not abut the engine-block sealing face because there is mounted on the sheet layer provided with the combustion-chamber sealing elements a further sealing element, which in the fitted state of the cylinder head gasket projects beyond this sheet layer in the direction of the engine block, the height of the offset is advantageously dimensioned smaller than the projection dimension; in the last-mentioned case, the cylinder liner or a cylinder-head support element then similarly acts as a deformation-limiting device for the further sealing element.

As already mentioned, in a cylinder head gasket according to the invention the combustion-chamber sealing element is formed by a single-layer annular region of the sheet layer provided with the combustion-chamber sealing element, and in embodiments that are preferred for cost reasons this annular region is a flat region of the sheet layer; as will emerge from the following, this is not to preclude the combustion-chamber sealing element having, around the combustion chamber opening, a height- or thickness profile with relatively slight variations of the height and/or thickness. It may however also be advantageous to provide the sheet layer containing the combustion-chamber sealing element with one or more plastically deformable beads, which are disposed in the sealing system on the liner and used for a so-called height adaptation.

The cylinder head gasket according to the invention has only a single steel sheet layer, for which it is used a sheet without spring steel properties.

In order, in the case of a single-layer cylinder head gasket according to the invention, to ensure that in the fitted state the compression forces acting upon the gasket are not introduced quite predominantly immediately around the combustion-chamber opening into the cylinder head gasket and relatively high component distortions arise at the cylinder head, it is advantageous to fashion the cylinder head gasket according to the invention in such a way that the sheet layer in particular at its side that is to be remote from the cylinder head has in relation to the liner radially outside of the combustion-chamber sealing element cylinder-head support elements, in the regions of which the gasket is thicker than in regions of the gasket that immediately adjoin the support elements. In this case, embodiments are preferred, in which the thickness of the gasket in the region of these support elements is thicker by the material thickness of the metal sheet used for the sheet layer in order to take into account the larger liner projection of the sealing system according to the invention. In principle, a support element could be produced by providing on the sheet layer either a sheet part manufactured as a separate part or a pressure-resistant coating, but far lower manufacturing costs arise with an embodiment, in which a support element takes the form of a sheet tab that is bent out from the sheet layer and folded over onto the sheet layer, because this entails merely a punching- and bending operation for producing and folding over the sheet tab, which is still connected to the sheet layer.

It is particularly recommended to dispose the support elements at those points of the cylinder head gasket, at which the highest compression forces (per unit area) act upon the gasket.

As the compression forces acting upon a fitted cylinder head gasket are applied in a so-to-speak concentrated manner by the cylinder head bolts and the engine components cannot be regarded as absolutely rigid components, it is recommended to fashion a cylinder head gasket according to the invention in such a way that at least one support element is provided around the combustion chamber opening between at least two mutually adjacent screw holes in order to even out the compression forces acting upon the gasket.

Even in the case of a single-layer cylinder head gasket according to the invention it is possible, given the use of cylinder-head support elements according to the invention, to dispense with the otherwise necessary thickened areas of the gasket around the screw holes, with the result that preferred embodiments of the cylinder head gasket according to the invention are notable for the fact that annular regions of the sheet layer that adjoin and surround the screw holes are single-layer and in particular flat regions of the sheet layer - such a gasket therefore does not have surround layers around the screw holes either.

In order to achieve sealing of as high a quality as possible immediately around the combustion chamber, in a sealing system according to the invention it may be recommended that the end face of the liner that is to be pressed against the cylinder head gasket is provided with a convex profile (in a longitudinal section through the liner), with the result that the liner is pressed with more or less line contact and hence with high pressure per unit area against the cylinder head gasket.

As the engine components, engine block and cylinder head, are not absolutely rigid parts, without special measures the compression forces acting upon the fitted cylinder head gasket decrease with increasing distance from the screw holes for the cylinder head bolts. To counteract this, the combustion-chamber sealing element of preferred embodiments has a height profile along the periphery of the combustion chamber opening such that the mean thickness of the combustion-chamber sealing element in regions, which (viewed from the liner axis) are situated between mutually adjacent screw holes, is greater than in regions, which (likewise viewed from the liner axis) are situated in front of the screw holes. In particular, the thickness of the combustion-chamber sealing element increases from a region immediately adjoining a screw hole along the sealing element with increasing distance from this screw hole, namely approximately up to a diametral plane of the combustion chamber opening, from which mutually adjoining screw holes are equidistant, whereupon the thickness of the sealing element decreases again.

As already explained above, given the use of a single-layer cylinder head gasket that in the fitted state rests on a cylinder liner having a liner projection, measures should be taken to avoid excessive distortions of the cylinder head; a minimizing of cylinder head distortions simultaneously combined with good sealing around the combustion chamber openings may be achieved mainly in that the compression forces acting upon the fitted cylinder head gasket are introduced not quite predominantly into the gasket regions immediately surrounding the combustion chamber openings.

For this reason, in a cylinder head gasket for a combustion engine having cylinder liners with liner projection, which cylinder head gasket comprises only a single steel sheet layer having an annular region that adjoins and surrounds the combustion chamber opening and forms a combustion-chamber sealing element and is provided for abutting an end face of a liner, an invention is seen in the fact that the sheet layer (in relation to the liner) radially outside of the combustion-chamber sealing element is provided with cylinder-head support elements, in the regions of which the cylinder head gasket is thicker than in regions of the cylinder head gasket that immediately adjoin the support elements. The previous explanations and additional remarks regarding cylinder-head support elements apply also to this invention.

In particular, the support elements are so disposed and so dimensioned that in the fitted state of the cylinder head gasket at least 25% and at most 75%, preferably at least 40% and at most 60% and in particular approximately half of the clamping forces acting as a whole upon the cylinder head gasket are introduced at the points of the support elements into the cylinder head gasket in order to minimize the distortions that arise in the assembled engine at the cylinder head.

Further features, advantages and details of the invention arise from the accompanying graphical representation and the following description of a particularly advantageous embodiment of the sealing system according to the invention and of a cylinder head gasket according to the invention; the drawings show:
- Figure 1 a: plan view of part of a cylinder head gasket according to the invention, wherein this gasket part comprises only a single steel sheet layer;

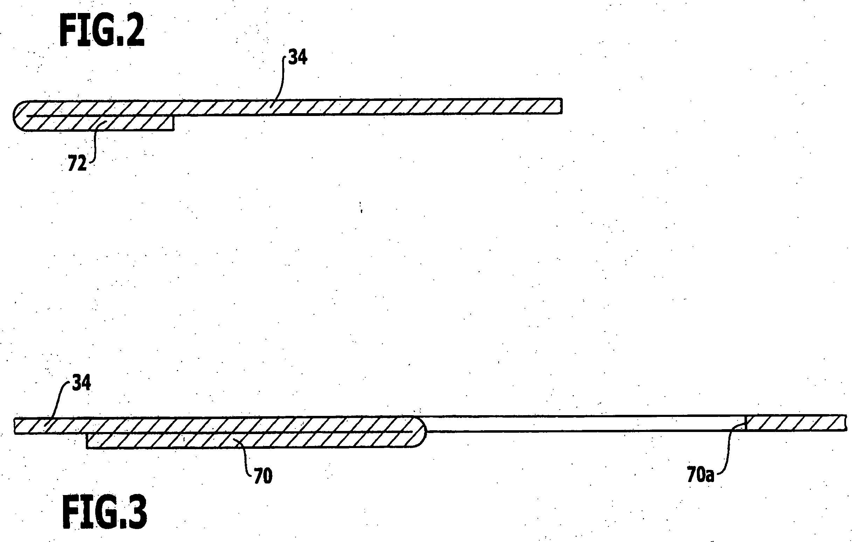

- Figure 2: a section according to the line 2-2 in Figure 1;
- Figure 3: a section according to the line 3-3 in Figure 1;
- Figure 4: a section according to the line 4-4 in Figure 1, and
- Figure 5: the part of the cylinder head gasket represented in Figure 4 in the fitted state between an engine block provided with a cylinder liner and a cylinder head, in a section corresponding to the line 5-5 in Figure 1.

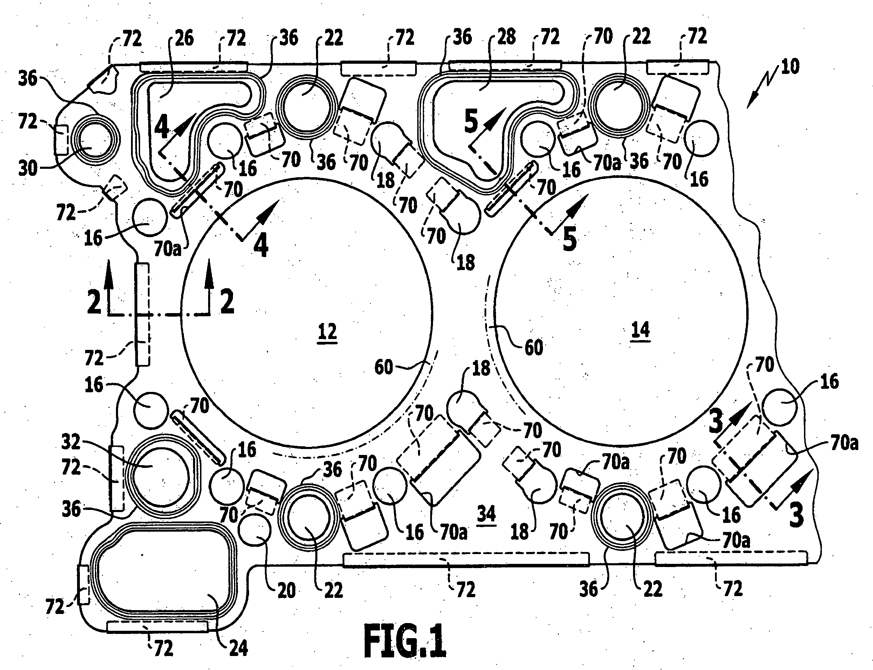

The part, shown in Figure 1, of a cylinder head gasket 10 according to the invention for a multi-cylinder engine has two combustion chamber openings 12 and 14, screw holes 16 and 18 disposed around these openings for the passage of cylinder head bolts, a screw hole 20 for the passage of a so-called fitting bolt, cooling-water through-openings 22 and 24 and engine-oil through-openings 26, 28, 30 and 32. Apart from the cylinder-head support elements yet to be described below, the steel sheet layer 34 substantially forming the represented part of the cylinder head gasket 10 is single-layer all over, i.e. outside these cylinder-head support elements the thickness of the metallic part of the cylinder head gasket is everywhere equal to the thickness of the steel sheet that is used.

As Figures 1, 4 and 5 reveal, the steel sheet layer 34 around the fluid through-openings 22, 24, 26, 28, 30 and 32 is provided on both sides with elastomer sealing beads, which for the sake of simplicity have all been provided with the same reference characters 36 and 38, wherein 36 denotes the sealing beads disposed on the side of the steel sheet layer 34 that is to face the cylinder head, while 38 denotes the sealing beads disposed on the engine-block side of the steel sheet layer 34. In the case of each fluid through-opening, the sealing beads 36 and 38 lie opposite one another.

As a comparison of Figures 1, 4 and 5 reveals, Figure 1 shows a plan view of the side of the cylinder head gasket according to the invention that is to face the cylinder head.

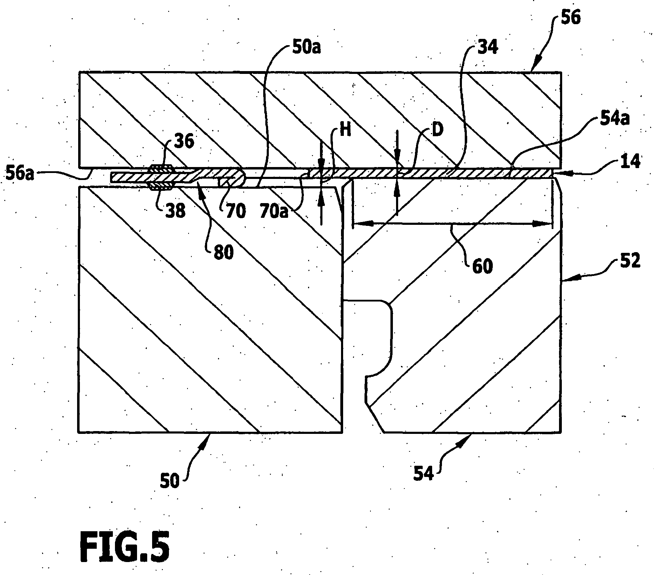

Before describing the cylinder head gasket according to the invention in detail, an explanation of Figure 5 is first provided, which shows the cylinder head gasket in the fitted state.

In Figure 5, 50 denotes an only partially represented engine block, 54 denotes a cylinder liner that is inserted into the engine block 50 and surrounds a combustion chamber 52 of the engine, and 56 denotes a likewise only partially and diagrammatically represented cylinder head. The engine block 50 forms an engine-block sealing face 50a, the cylinder liner 54 a liner sealing face 54a, and the cylinder head 56 a cylinder-head sealing face 56a. Between these sealing faces 50a, 54a and 56a the cylinder head gasket 10 is clamped when cylinder head bolts, which are not illustrated in Figure 5, are tightened - these cylinder head bolts engage through plain bores in the cylinder head 56 and are screwed into tapped bores of the engine block 50.

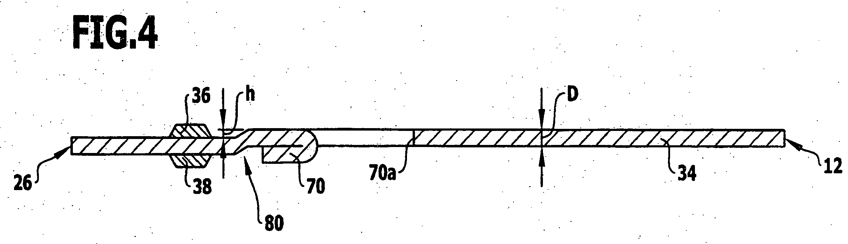

The cylinder liner 54 is supported according to Figure 5, in a downward direction in a non-illustrated but known manner, on the engine block 50 and projects with its sealing face 54a beyond the engine-block sealing face 50a - the technical term for this being liner projection. Once the cylinder head gasket has been fitted and the cylinder head bolts have been tightened, the projection dimension, by which the liner sealing face 54a projects beyond the engine-block sealing face 50a and which is denoted in Figure 5 by "H", is at least equal to the thickness (sheet thickness) of the steel sheet layer 34 denoted in Figures 4 and 5 by "D" - preferably the projection dimension H is then equal to or only slightly greater than the sheet thickness D.

Annular regions 60 of the steel sheet layer 34 that surround the combustion chamber openings 12 and 14 and are clamped in between the liner sealing faces 54a and the cylinder-head sealing face 56a (see Figures 1 and 5) form in each case a combustion-chamber sealing element, wherein according to the invention the material thickness of such an annular region and/or combustion-chamber sealing element is equal to the sheet thickness D.

At this point it should however be pointed out that the annular regions 60 might be provided with one or more plastically deformable beads, which during tightening of the cylinder head bolts are plastically (and possibly to a slight extent elastically) deformed and flattened. By means of such beads more or less line-shaped sealing zones surrounding the combustion chambers 52 are produced, in which particularly high pressures per unit area act between the cylinder-head sealing face 56a, the cylinder head gasket 10 and the liner sealing faces 54a. In this case, the projection dimension H is then increased by the height of the flattened beads. These beads are used also for a so-called height adaptation, i.e. a taking into account of manufacturing- and assembly tolerances in the levels and the shape of the sealing faces 54a and 56a.

So that the clamping forces generated by the tightened cylinder head bolts and acting upon the cylinder head gasket 10 are not quite predominantly concentrated on the annular regions 60 and undesirably high distortions of the cylinder head 56 are avoided, the cylinder head gasket according to the invention outside of the annular regions 60 forming the combustion-chamber-opening sealing openings is according to the invention provided with cylinder-head support elements, namely purposefully in those regions of the cylinder head gasket, upon which in the fitted state the highest pressures per unit area act. These regions are preferably regions of the cylinder head gasket that are situated between the screw holes 16 and 18, but also gasket regions that are situated at the periphery of the cylinder head gasket - because of the distribution of the screw holes for the cylinder head bolts over the cylinder head gasket and because of the fact that a cylinder head is not an absolutely rigid engine component, without special measures the cylinder head of a multi-cylinder engine in the peripheral regions of the cylinder head gasket, above all in the narrow side regions thereof, is drawn downwards, i.e. in the direction of the engine block, to a greater extent than in other regions, and such a crowning of the cylinder-head sealing face 56a according to Figure 5 in an upward direction is additionally intensified by the high gas pressures that prevail in a combustion chamber during the firing of a cylinder.

For this reason, the cylinder head gasket according to the invention in the previously described regions is provided with cylinder-head support elements, in the regions of which the cylinder head gasket is thicker than in regions of the cylinder head gasket that immediately adjoin the support elements.

In the sealing system according to the invention having cylinder liners with a liner projection and having a cylinder head gasket formed substantially only by a single steel sheet layer, the cylinder-head support elements are disposed on the underside, i.e. the side of the steel sheet layer that is to face the engine block, so as to project beyond the underside of the steel sheet layer.

In the preferred embodiment of the cylinder head gasket according to the invention that is illustrated in the drawings the support elements each take the shape of a sheet tab, which is bent out from the steel sheet layer 34 and folded over onto the sheet layer and which in the representation according to Figure 1 rests against the underside of the steel sheet layer 34. In Figure 1 support elements situated between screw holes 16 and/or 18 and/or 16 and 18 are denoted by 70 and support elements situated at the periphery of the cylinder head gasket 10 are denoted by 72.

Whereas the peripheral support elements 72 are produced in that during the blanking of the sheet layer 34 at the periphery thereof in each case a sheet tab is formed, which is then folded over through 180° onto the sheet layer, for producing a support element 70 situated in the interior of the cylinder head gasket 10 a punching cut is carried out and leads to a sheet tab that is still connected to the sheet layer and is then bendable through 180° - if such a support element 70 is not adjoined by a screw hole, such as one of the screw holes 18, the steel sheet layer 34 after the bending-round of the sheet tab forming a support element 70 then has, in addition to the root of the support element 70, an opening denoted in Figure 1 by 70a (in Figure 1 however not all of these openings have been denoted by 70a).

In the regions of the cylinder-head support elements 70 and 72 the part of the cylinder head gasket 10 consequently has a material thickness equal to double the metal sheet thickness D.

Because of the cylinder-head support elements of the single-layer cylinder head gasket according to the invention it is possible to forego providing the cylinder head gasket with thickened areas around the screw holes 16 and 18 without this necessarily being at the cost of higher distortions of the cylinder head. According to the invention, therefore, the steel sheet layer 34 in regions adjoining and surrounding the screw holes 16, 18 is flat and single-layer, apart from the support elements 70 adjoining the screw holes 18.

Before describing Figures 4 and 5 in more detail, it is first necessary to point out that in Figure 5 the elastomer sealing beads 36 and 38 have been illustrated, not as they are in reality, but rather as if they have not yet been compressed and hence reduced in thickness. In actual fact, in the fitted state of the cylinder head gasket the sealing beads 36 and 38 are compressed between the metal sheet layer 34, the engine-block sealing face 50a and the cylinder-head sealing face 56a and are therefore flattened in such a way that they abut the flat sealing faces 50a and 56a.

As Figures 4 and 5 reveal, the sheet layer 34 radially outwardly of the cylinder liner 54 and adjacent to the support element 70 is offset in the direction of the engine-block sealing face 50a, and the height of the offset 80 is according to the invention at least approximately equal to half the thickness of the support element 70, i.e. the sheet thickness D, at most however approximately equal to the projection dimension H. The height of the offset 80 is at any rate then approximately equal to half the height or thickness of the support element 70, if the sealing beads 36 and 38 in the non-deformed state are at least approximately of the same thickness and/or height.

What Figure 5 does not reveal is a preferred design of the liner sealing face 54a - it may in fact be advantageous to provide the liner sealing face 54a along its periphery with such a cross-sectional profile that it has, in the section represented in Figure 5, a convex profile, i.e. a curvature according to Figure 5 in an upward direction.

A further feature of a preferred embodiment of the cylinder head gasket according to the invention is not illustrated in Figure 5 either because it is impossible to illustrate this feature, given the scale selected for Figure 5: for the reasons outlined in the portion of the description before the description of the Figures it may be advantageous to provide the combustion-chamber sealing element formed by the annular region 60 with a height profile along the periphery of the combustion-chamber opening 14 such that the mean thickness of the combustion-chamber sealing element in regions that are situated - viewed from the combustion chamber 52 - between mutually adjacent screw holes 16 and/or 18 is greater than in regions that are situated - viewed from the combustion chamber 52 - in front of these screw holes, in order to take account of the fact that the cylinder liner 54 and the cylinder head 56 are not absolutely rigid components.

## Claims

1. Sealing system for a reciprocating piston combustion engine having cylinder liners (54), which in order to form a liner projection project (H) beyond a sealing face (50a) of an engine block (50) facing a cylinder " head (56), and having a cylinder head gasket (10), which comprises only one steel sheet layer (34) with several combustion chamber openings (12, 14) and screw holes (16, 18) for the passage of cylinder head bolts, wherein an annular region (60) of the steel sheet layer that adjoins and surrounds a combustion chamber opening associated therewith and forms a metallic combustion chamber sealing element (60) is provided for being clamped between an end face (54a) of a liner and the cylinder head, **characterized in that**
said steel sheet layer (34) consists of steel other than a spring steel, that the material thickness (D) of the combustion chamber sealing element (60) is equal to the material thickness of the sheet of the steel sheet layer, and **in that** in the tightened state of the cylinder head bolts the liner end faces (54a) project beyond the engine block sealing face (50a) by a projection dimension (H) that is at least equal to the material thickness of the sheet of the steel sheet layer and at most equal to 1.5 times said material thickness, wherein for each combustion chamber opening (12, 14) (i) above the liner (54) associated with said combustion chamber opening, the steel sheet layer (34) is provided with a bead surrounding said combustion chamber opening and being plastically deformable during tightening of the cylinder head bolts, and/or (ii) the end face (54a) of the liner (54) associated with said combustion chamber opening is provided with a convex profile projecting toward the cylinder head gasket and surrounding the combustion chamber opening, and wherein the steel sheet layer (34) has in relation to the liner (54) radially outwardly of the combustion-chamber sealing element (60) cylinder-head support elements (70, 72), in the regions of which the cylinder head gasket is thicker than in regions of the cylinder head gasket that immediately adjoin the support elements, at least one of the support elements (70, 72) being a sheet tab that is bent out from the steel sheet layer 34) and folded over onto the steel sheet layer.

2. Sealing system according to claim 1, **characterized in that** the sheet layer (34) is offset in relation to the liner (54) radially outwardly thereof in the direction of the engine-block sealing face (50a) and the height of the offset (30) is at most approximately equal to the projection dimension (H).

3. Sealing system according to claim 1 or 2, **characterized in that** the annular region (60) is a single-layer region of the steel sheet layer (34).

4. Sealing system according to one of claims 1 to 3, **characterized in that**, around the combustion chamber opening (12, 14), at least one support element (70, 72) is provided between at least two mutually adjacent screw holes (16, 18).

5. Sealing system according to one of claims 1 to 4, **characterized in that** at least one of the support elements (70, 72) is disposed on the sheet layer (34) at the side thereof that is to face the engine block (50).

6. Sealing system according to one of claims 1 to 5, **characterized in that** the combustion-chamber sealing element has a height profile along the periphery of the combustion chamber opening (12, 14) such that the mean thickness of the combustion-chamber sealing element in regions that are situated - viewed from the liner axis - between mutually adjacent screw holes (16, 18) is greater than in regions that are situated - viewed from the liner axis - in front of the screw holes (16, 18).

7. Sealing system according to one of claims 1 to 6, **characterized in that** the support elements (70, 72) are so disposed and so dimensioned that in the fitted state of the cylinder head gasket at least 25% and at most 75% of the total clamping forces acting upon the cylinder head gasket are introduced via the support elements (70, 72) into the cylinder head gasket.

8. Sealing system according to claim 7, **characterized in that** the support elements (70, 72) are so disposed and so dimensioned that in the fitted state of the cylinder head gasket at least 40% and at most 60% of the total clamping forces acting upon the cylinder head gasket are introduced via the support elements (70, 72) into the cylinder head gasket.

9. Sealing system according to one of claims 1 to 8, **characterized in that** radially outwardly of the liner (54) the steel sheet layer (34) is offset toward the engine block (50), wherein the height of the offset (80) is at most equal to the projection dimension (H) of the liner (54), and **in that** at least one elastomeric sealing element (36,38) is provided on the steel sheet layer (34).

10. Sealing system according to claim 9, **characterized in that** with regard to the liner (54) the elastomeric sealing element (36, 38) is provided radially outwardly of the offset (80).

## Patentansprüche

1. Dichtsystem für einen Hubkolben-Verbrennungsmotor mit Zylinderlaufbuchsen (54), welche zur Bildung eines Buchsenüberstands über eine einem Zylinderkopf (56) zugewandte Dichtfläche (50a) eines Motorblocks (50) vorstehen (H), und mit einer Zylinderkopfdichtung (10), die nur eine einzige Stahlblechlage (34) mit mehreren Brennraumöffnungen (12, 14) und Schraubenlöchern (16, 18) für den Durchtritt von Zylinderkopfschrauben aufweist, wobei ein Ringbereich (60) der Stahlblechlage, welcher an eine ihm zugeordnete Brennraumöffnung angrenzt und diese umschließt und welcher ein metallisches Brennraum-Dichtelement (60) bildet, zum Einspannen zwischen einer Stirnfläche (54a) einer Laufbuchse und dem Zylinderkopf vorgesehen ist, **dadurch gekennzeichnet, dass**
die Stahlblechlage (34) aus einem anderen Stahl als Federstahl besteht, die Materialdicke (D) des Brennraum-Dichtelements (60) gleich der Materialdicke des Blechs der Stahlblechlage ist und dass bei angezogenen Zylinderkopfschrauben die Laufbuchsen-Stirnflächen (54a) die Motorblock-Dichtfläche (50a) um ein Überstandsmaß (H) überragen, welches mindestens gleich der Materialdicke des Blechs der Stahlblechlage und höchstens gleich dem 1,5-Fachen dieser Materialdicke ist, wobei für jede Brennraumöffnung (12, 14) gilt, dass (i) die Stahlblechlage (34) oberhalb der der jeweiligen Brennraumöffnung (12, 14) zugeordneten Laufbuchse (54) mit einer um die Brennraumöffnung herum verlaufenden und beim Anziehen der Zylinderkopfschrauben plastisch verformbaren Sicke versehen ist und/oder dass (ii) die der jeweiligen Brennraumöffnung (12, 14) zugeordnete Stirnfläche (54a) der Laufbuchse (54) mit einem balligen Profil versehen ist, welches in Richtung auf die Zylinderkopfdichtung vorsteht und die Brennraumöffnung umgibt, und wobei die Stahlblechlage (34) bezüglich der Laufbuchse (54) radial außerhalb des Brennraum-Dichtelements (60) Zylinderkopf-Abstützelemente (70, 72) aufweist, in deren Bereichen die Zylinderkopfdichtung dicker ist als in an die Abstützelemente unmittelbar angrenzenden Bereichen der Zylinderkopfdichtung, wobei mindestens eines der Abstützelemente (70, 72) die Gestalt eines aus der Stahlblechlage (34) herausgebogenen und auf die Stahlblechlage umgefalteten Blechlappens hat.

2. Dichtsystem nach Anspruch 1, **dadurch gekennzeichnet, dass** die Blechlage (34) bezüglich der Laufbuchse (54) radial außerhalb der Letzteren in Richtung auf die Motorblock-Dichtfläche (50a) abgekröpft und die Höhe der Kröpfung (80) höchstens ungefähr gleich dem Überstandsmaß (H) ist.

3. Dichtsystem nach Anspruch 1 oder 2, **dadurch gekennzeichnet, dass** der Ringbereich (60) ein einlagiger Bereich der Stahlblechlage (34) ist.

4. Dichtsystem nach einem der Ansprüche 1 bis 3, **dadurch gekennzeichnet, dass** um die Brennraumöffnung (12, 14) herum zwischen mindestens zwei einander benachbarten Schraubenlöchern (16, 18) wenigstens ein Abstützelement (70, 72) vorgesehen ist.

5. Dichtsystem nach einem der Ansprüche 1 bis 4, **dadurch gekennzeichnet, dass** mindestens eines der Abstützelemente (70, 72) auf der dem Motorblock (50) zuzuwendenden Seite der Blechlage (34) auf dieser angeordnet ist.

6. Dichtsystem nach einem der Ansprüche 1 bis 5, **dadurch gekennzeichnet, dass** das Brennraum-Dichtelement längs des Umfangs der Brennraumöffnung (12, 14) ein Höhenprofil dergestalt aufweist, dass die mittlere Dicke des Brennraum-Dichtelements in von der Laufbuchsenachse aus gesehen zwischen einander benachbarten Schraubenlöchern (16, 18) liegenden Bereichen größer ist als in von der Laufbuchsenachse aus gesehen vor den Schraubenlöchern (16, 18) liegenden Bereichen.

7. Dichtsystem nach einem der Ansprüche 1 bis 6, **dadurch gekennzeichnet, dass** die Abstützelemente (70, 72) so angeordnet und so bemessen sind, dass bei eingebauter Zylinderkopfdichtung mindestens 25 % und höchstens 75 % der auf die Zylinderkopfdichtung insgesamt einwirkenden Einspannkräfte über die Abstützelemente (70, 72) in die Zylinderkopfdichtung eingeleitet werden.

8. Dichtsystem nach Anspruch 7, **dadurch gekennzeichnet, dass** die Abstützelemente (70, 72) so angeordnet und so bemessen sind, dass bei eingebauter Zylinderkopfdichtung mindestens 40 % und höchstens 60 % der auf die Zylinderkopfdichtung insgesamt einwirkenden Einspannkräfte über die Abstützelemente (70, 72) in die Zylinderkopfdichtung eingeleitet werden.

9. Dichtsystem nach einem der Ansprüche 1 bis 8, **dadurch gekennzeichnet, dass** die Stahlblechlage (34) bezüglich der Laufbuchse (54) radial außerhalb der Letzteren in Richtung auf den Motorblock (50) abgekröpft ist, wobei die Höhe der Kröpfung (80) höchstens gleich dem Überstandsmaß (H) der Laufbuchse (54) ist, und dass mindestens ein elastomeres Dichtelement (36, 38) an der Stahlblechlage (34) vorgesehen ist.

10. Dichtsystem nach Anspruch 9, **dadurch gekennzeichnet, dass** das elastomere Dichtelement (36, 38) bezüglich der Laufbuchse (54) radial außerhalb der Kröpfung (80) vorgesehen ist.

## Revendications

1. Système d'étanchéité pour un moteur à combustion à piston alternatif comportant des chemises de cylindre (54), lesquelles chemises de cylindre, de manière à former un dépassement de chemise, font saillie (H) au-delà d'une face d'étanchéité (50a) d'un bloc-moteur (50) faisant face à une culasse (56), et comportant un joint d'étanchéité de culasse (10), lequel joint d'étanchéité de culasse comprend seulement une couche en tôle d'acier (34) avec plusieurs ouvertures de chambre de combustion (12, 14) et des trous de vis (16, 18) pour le passage de boulons de culasse, dans lequel une région annulaire (60) de la couche en tôle d'acier qui jouxte et entoure une ouverture de chambre de combustion qui lui est associée et qui forme un élément d'étanchéité de chambre de combustion en métal (60) est constituée de manière à être serrée entre une face d'extrémité (54a) d'une chemise et la culasse, **caractérisé en ce que** :
ladite couche en tôle d'acier (34) est constituée par un acier autre qu'un acier à ressort, **en ce que** l'épaisseur de matériau (D) de l'élément d'étanchéité de chambre de combustion (60) est égale à l'épaisseur de matériau de la tôle de la couche en tôle d'acier, et **en ce que**, dans l'état vissé des boulons de culasse, les faces d'extrémité de chemise de cylindre (54a) font saillie au-delà de la face d'étanchéité de bloc-moteur (50a) sur une dimension de dépassement (H) qui est au moins égale à l'épaisseur de matériau de la tôle de la couche en tôle d'acier et au plus égale à 1,5 fois ladite épaisseur de matériau, dans lequel, pour chaque ouverture de chambre de combustion (12, 14) (i) au-dessus de la chemise (54) associée à ladite ouverture de chambre de combustion, la couche en tôle d'acier (34) est munie d'un bourrelet qui entoure ladite ouverture de chambre de combustion et qui peut être déformé plastiquement pendant le vissage des boulons de culasse, et/ou (ii) la face d'extrémité (54a) de la chemise (54) associée à ladite ouverture de chambre de combustion est munie d'un profil convexe qui fait saillie en direction du joint d'étanchéité de culasse et qui entoure l'ouverture de chambre de combustion, et dans lequel la couche en tôle d'acier (34) comporte, par rapport à la chemise (54) radialement vers l'extérieur de l'élément d'étanchéité de chambre de combustion (60), des éléments de support de culasse (70, 72), dans les régions desquels le joint d'étanchéité de culasse est plus épais que dans des régions du joint d'étanchéité de culasse qui jouxtent de façon immédiate les éléments de support, au moins l'un des éléments de support (70, 72) étant une patte en tôle qui est recourbée vers l'extérieur depuis la couche en tôle d'acier (34) et qui est repliée sur la couche en tôle d'acier.

2. Système d'étanchéité selon la revendication 1, **caractérisé en ce que** la couche en tôle d'acier (34) est décalée par rapport à la chemise (54) radialement vers l'extérieur en direction de la face d'étanchéité de bloc-moteur (50a) et la hauteur du décalage (80) est au plus approximativement égale à la dimension de dépassement (H).

3. Système d'étanchéité selon la revendication 1 ou 2, **caractérisé en ce que** la région annulaire (60) est une région monocouche de la couche en tôle d'acier (34).

4. Système d'étanchéité selon l'une des revendications 1 à 3, **caractérisé en ce que**, autour de l'ouverture de chambre de combustion (12, 14), au moins un élément de support (70, 72) est prévu entre au moins deux trous de vis mutuellement adjacents (16, 18).

5. Système d'étanchéité selon l'une des revendications 1 à 4, **caractérisé en ce qu'**au moins l'un des éléments de support (70, 72) est disposé sur la couche en tôle d'acier (34) au niveau de son côté, c'est-à-dire de manière à faire face au bloc-moteur (50).

6. Système d'étanchéité selon l'une des revendications 1 à 5, **caractérisé en ce que** l'élément d'étanchéité de chambre de combustion présente un profil en hauteur suivant la périphérie de l'ouverture de chambre de combustion (12, 14) qui est tel que l'épaisseur moyenne de l'élément d'étanchéité de chambre de combustion dans des régions qui sont situées - tel que vu depuis l'axe de chemise - entre des trous de vis mutuellement adjacents (16, 18) est plus grande que dans des régions qui sont situées - tel que vu depuis l'axe de chemise - à l'avant des trous de vis (16, 18).

7. Système d'étanchéité selon l'une des revendications 1 à 6, **caractérisé en ce que** les éléments de support (70, 72) sont disposés et dimensionnés de telle sorte que dans l'état mis en place du joint d'étanchéité de culasse, au moins 25 % et au plus 75 % des forces de serrage totales opérant sur le joint d'étanchéité de culasse sont introduits via les éléments de support (70, 72) à l'intérieur du joint d'étanchéité de culasse.

8. Système d'étanchéité selon la revendication 7, **caractérisé en ce que** les éléments de support (70, 72) sont disposés et dimensionnés de telle sorte que dans l'état mis en place du joint d'étanchéité de culasse, au moins 40 % et au plus 60 % des forces de serrage totales opérant sur le joint d'étanchéité de culasse sont introduits via les éléments de support (70, 72) à l'intérieur du joint d'étanchéité de culasse.

9. Système d'étanchéité selon l'une des revendications 1 à 8, **caractérisé en ce que**, radialement vers l'extérieur de la chemise (54), la couche en tôle d'acier (34) est décalée en direction du bloc-moteur (50), dans lequel la hauteur du décalage (80) est au plus égale à la dimension de dépassement (H) de la chemise (54), et **en ce qu'**au moins un élément d'étanchéité en élastomère (36, 38) est prévu sur la couche en tôle d'acier (34).

10. Système d'étanchéité selon la revendication 9, **caractérisé en ce que**, par rapport à la chemise (54), l'élément d'étanchéité en élastomère (36, 38) est prévu radialement vers l'extérieur du décalage (80).
